# EUROPEAN PATENT SPECIFICATION

(11) **EP 3 179 453 B1**
(45) Date of publication and mention of the grant of the patent: **19.05.2021**
(21) Application number: 16199166.6
(22) Date of filing: 16.11.2016
(51) Int. Cl.: G07C 11/00, G06Q 30/02, G06K 9/00

(54) **QUEUE MONITORING BASED ON IMPRINT PROFILES**
WARTESCHLANGENÜBERWACHUNG AUF BASIS VON ABDRUCKSPROFILEN
SURVEILLANCE DE FILE D'ATTENTE SUR LA BASE DE PROFILS D'EMPREINTE

(30) Priority: 03.12.2015 GB 201521344
(43) Date of publication of application: 14.06.2017
(73) Proprietor: International Consolidated Airlines Group, S.A., Madrid 28042 (ES)
(72) Inventor: JOBLING, Daniel, Hounslow, Middlesex TW6 2SF (GB); MORGAN, Glenn, Hounslow, Middlesex TW6 2SF (GB)
(74) Representative: Lam, Alvin

(56) References cited:
- EP-A2- 0 992 949
- EP-A2- 2 339 506
- GB-A- 2 283 601
- JP-A- 2001 216 336
- US-A- 5 555 512
- ROBERT J ORR ET AL: "The smart floor", HUMAN FACTORS IN COMPUTING SYSTEMS, ACM, 2 PENN PLAZA, SUITE 701 NEW YORK NY 10121-0701 USA, 1 April 2000 (2000-04-01), pages 275-276, XP058294241, DOI: 10.1145/633292.633453 ISBN: 978-1-58113-248-9

## Description

### Field of the Invention

This invention relates generally to computerised queue monitoring, and more particularly to data processing for queue measurement based on profiles computed from captured imprints.

### Background

Queue monitoring systems are generally known, typically employing video image data processing to identify and track individuals within a monitored area. Other systems employ device tracking via WiFi (RTM) or BlueTooth (RTM) data connections to locate the associated individuals. While these conventional systems do provide queue measurement metrics, there are drawbacks with relying on cameras and/or data beacons to locate an individual. For example, image processing for facial recognition is often processor and data storage intensive, and detection accuracy can vary significantly due to any number of factors such as lighting, occlusions, variations in appearance, availability of matching user information in a database, etc. As another example, device-based tracking requires availability and connectivity to suitable computing devices and is prone to inaccurate location detection and tracking.

EP2339506 discusses a system for monitoring the motion of objects configured to identify objects meeting predetermined criteria appearing in a scene and to track the motion of identified objects across the scene.

JP2001216336 discusses a moving state analysis system for a user which can analyze the moving state of the user in a store such as a department store accurately in terms of time.

GB2283601 discusses a queue management system for monitoring and directing individuals waiting in a waiting area for interaction with a plurality of service locations. The system comprises a sensor in or near the waiting area for detecting individuals. A further sensor may be arranged at the head of the queuing position for detecting the case when no individuals are present. Pressure mats may be used as sensors. The system permits to monitor service location usage and queuing time.

EP0992949 discusses a people counting system composed of one or more sensor surfaces each one formed by independent pressure sensible cells in a bi-dimensional matrix arrangement.

US5555512 discusses a picture processing apparatus composed of an infrared ray sensor for producing an infrared picture in which a heat distribution of a measured area is recorded.

ROBERT J ORR ET AL: "The smart floor", HUMAN FACTORS IN COMPUTING SYSTEMS, ACM, 2 PENN PLAZA, SUITE 701 NEW YORK NY 10121-0701 USA, 1 April 2000 (2000-04-01), pages 275-276, XP058294241, DOI: 10.1145/633292.633453, ISBN: 978-1-58113-248-9, concerns a system for identifying people based on their footstep force profiles.

What is desired are more robust, efficient and accurate techniques for queue monitoring and measurement of queue metrics.

### Summary of the Invention

Aspects of the present invention are set out in the accompanying claims.

According to one aspect, the present invention provides a queue monitoring system as set out in claim 1.

In another aspect, the present invention provides a computer implemented method for queue monitoring as set out in claim 11.

In a further aspect, there is provided a computer readable medium in accordance with claim 12..

### Brief Description of the Drawings

There now follows, by way of example only, a detailed description of embodiments of the present invention, with references to the figures identified below.
Figure 1 is a block diagram showing the main components of a queue monitoring system according to an embodiment of the invention.
Figure 2 is a flow diagram illustrating the main processing steps performed by the system of Figure 1 according to an embodiment.
Figure 3 is a schematic illustration of an exemplary monitored queue area.
Figure 4 is a diagram of an example of a computer system on which one or more of the functions of the described embodiments may be implemented.

### Description of Embodiments

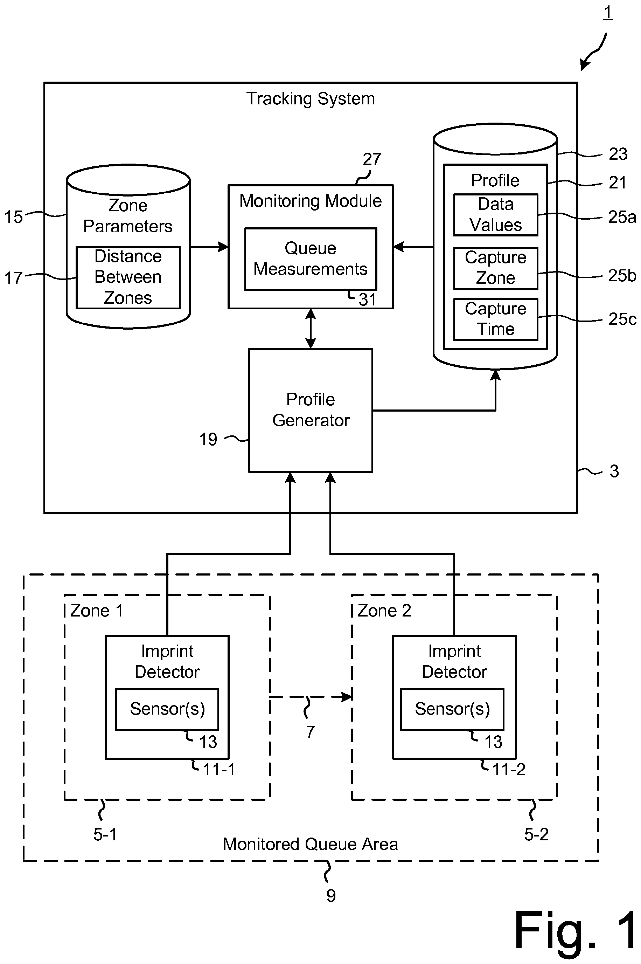

Referring to the schematic block diagram of Figure 1, a system 1 for queue monitoring according to an embodiment comprises a tracking system 3 for processing received data and tracking the movement of people between predefined zones 5 along a travel path 7 of a monitored queue area 9. The monitored queue area 9 may be located at a service point such as a security checkpoint or gate in an airport terminal, a check-out kiosk or counter in a retail outlet, an automated teller or counter in a bank, a ticket machine in a station, or the like. In this context, the zones 5 may be defined at key locations or stages of the respective queue area 9 that will be traversed by every person passing through that queue area. Preferably, although not necessarily, a first zone is located at the start of the monitored queue area and a second zone is located at the end of the monitored queue area. The travel path 7 from the first zone 5-1 to the second zone 5-2 may be a linear path, or a non-linear path such as a curve, zig-zag or snake, etc.

The tracking system 3 is communicatively coupled to one or more imprint detectors 11-1 provided at a first zone 5-1 located along the travel path 7, and to one or more imprint detectors 11-2 provided at a second zone 5-2 located a known distance 11 from the first zone 5-1 along the travel path 7. The imprint detectors 11 capture imprint data in response to a person entering (or stepping into/onto) the respective zone 5 and transmit the captured imprint data to the tracking system 3 for processing. In one embodiment, each imprint detector 11 includes at least one pressure sensor 13, and preferably a plurality of pressure sensors (including a pressure mat or array/matrix of pressure sensors), configured to capture data defining a pressure imprint in response to the person entering the respective zone 5. Each pressure imprint corresponds to an impression of the person's foot or shoe in contact with the pressure sensor 13, which is positioned on the floor of the monitored queue area 9. The captured imprint data may indicate the variation of pressure distribution though the course of a person's step onto the pressure sensing layer 13, for example starting with the person's heel touching the pressure sensing layer and subsequently transferring force to the toes. The captured imprint data also includes data identifying the time the data was captured, and an identifier of the respective imprint detector 11 and/or zone 5. The imprint data may include a sequence of pressure imprints, for example corresponding to left and right foot steps along the pressure sensing layer 13.

Additionally or alternatively, each imprint detector 11 may include one or more thermal sensors 13 (including a thermal sensor mat or array of thermal sensors), configured to capture data defining a heat imprint in response to the person entering the zone 5. Each heat imprint corresponds to an imprint of the person's foot in contact with a thermal mat of a respective zone. As yet another alternative, each imprint detector 11 may include a thermographic imaging sensor 13 (also called a thermographic camera, infrared camera or thermal imaging camera), configured to capture data defining a heat signature in response to the person entering the zone. The thermographic sensor 13 may form an image of the imprint of the person's foot using infrared radiation to detect a residual heat signature left by the foot stepping on the floor or mat of the respective zone. Each zone 5 may be configured with a plurality of imprint detectors 11, each providing respective imprint data that can be used to generate a more comprehensive profile of the person entering the respective zone 5.

Such pressure and thermal sensors 13 are of types that are known *per se,* and need not be described further. Each imprint detector 11 may be communicatively coupled to the tracking system 3 via respective interfaces (not shown) for communicating data of one or more known types of data communication link, such as a computer data cabling system or a data network link, or a combination of the two.

The tracking system 3 stores zone parameter data 15 identifying the known distance 17 along the travel path 7 between the first and second zones 5. The stored data 15 may also identify the location of each of the zones 5 within the queue area 9, and unique identifiers of the respective imprint detector(s) 5 provided at each zone 5.

A profile generator 19 of the tracking system 3 receives captured imprint data from the respective imprint detectors 11 and determines a corresponding profile 21 based on the received imprint data. The profile generator 19 may store the generated profiles 21 in a working memory or database 23. The profile 21 may include computed data values 23a of one or more characteristics of the associated person, including weight, weight distribution, pressure distribution, heat distribution, foot shape, shoe shape, gait, or any other biometric characteristic. The profile 21 may also include data identifying the associated zone 25b and the time 25c that the respective imprint data was captured. Each generated profile 21 may also include a corresponding unique identifier representing the associated person entering the respective zone.

A monitoring module 27 of the tracking system 3 determines that a particular person has traversed from the first zone 5-1 to the second zone 5-2, by identifying matching profiles 21 derived from the imprint data received from the first and second imprint detectors 11. The monitoring module 27 may identify matching profiles 21 by comparing data values 25a of the respective one or more characteristics based on predefined matching criteria. After identifying matching profiles 21 associated with the same person from respective zones 5, the monitoring module 27 computes one or more queue measurements 31, including a travel time of the identified person traversing from the first zone 5-1 to the second zone 5-2 (i.e. from the defined start point of the monitored queue area to the defined end point). The monitoring module 27 may also update a count of people in the queue area, based on unique profiles entering the first zone, and matching profiles subsequently entering the second zone. The computed queue measurements 31 are used by the monitoring module 27 to compute further queue measurements 31 for the associated queue area, including at least queue flow rates, and to raise control signals and/or notifications in response to analysis of the queue measurements.

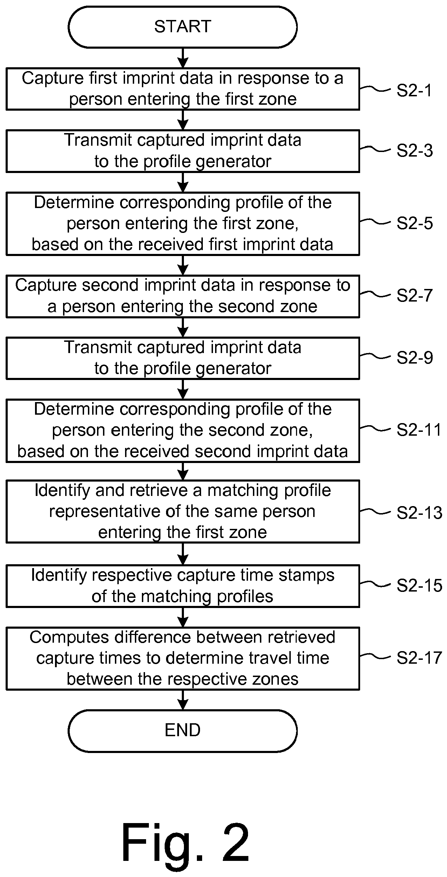

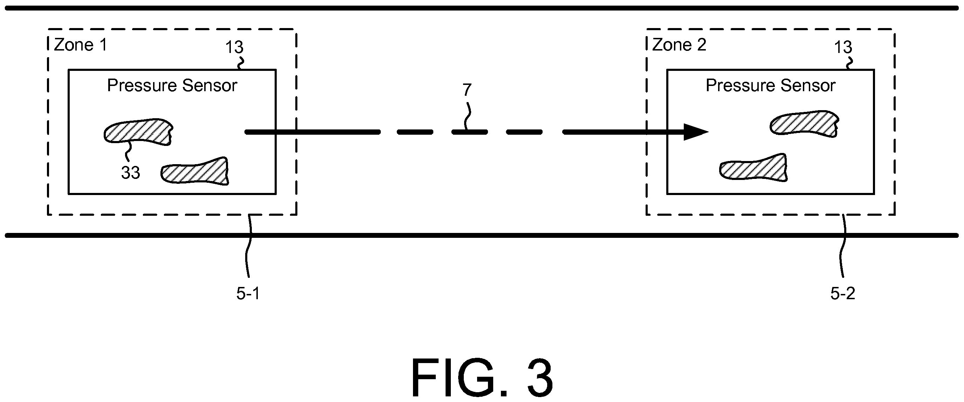

A more detailed description of the operation of the components forming part of the system 1 in this embodiment will now be given with reference to the flow diagrams of Figure 2, for an example computer-implemented queue measurement process using the tracking system 3. Reference is also made to Figure 3, schematically illustrating an example of a monitored queue area 9 having a first zone 5-1 located at an entrance to the monitored queue area 9 and a second zone 5-2 located at an exit of the monitored queue area 9. Each zone 5 has a respective imprint detector 11 to capture data representative of a person's foot print(s) 33 as the person steps within the surface area of a pressure mat 13 defining the respective zone 5.

As shown in Figure 2, the process begins at step S2-1 where the imprint detector 11-1 of the first zone 5-1 captures imprint data in response to a person entering the first zone 5-1. In the example illustrated in Figure 3, each zone 5 includes a pressure mat 13 (i.e. pressure sensor) of the respective imprint detector 11, located on a floor of the queue area, the pressure mat 13 having a surface area that defines the respective zone 5. Preferably, the size and shape of the pressure mat 13 is configured to enable a sequence of complete foot or shoe prints 33 to be captured as the person steps within the surface area of the pressure mat to traverse the zone. At step S2-3, the captured imprint data is transmitted by the first imprint detector 11-1 to the profile generator 19 of the tracking system 3. At step S2-5, the profile generator 19 determines a corresponding profile 21 of the person entering the first zone 5-1, based on the imprint data received from the imprint detector 11-1 of the first zone 5-1. The generated profile 21 is stored in the memory 23 for subsequent retrieval.

At step S2-7, the imprint detector 11-2 of the second zone 5-2 captures imprint data in response to a person entering the second zone 5-2. The person entering the second zone 5-2 at this step may or may not be the same person who entered the first zone 5-1 at step S2-1. At step S2-9, the second imprint data captured at step S2-5 is transmitted by the second imprint detector 11-1 to the profile generator 19 of the tracking system 3. At step S2-11, the profile generator 19 determines a corresponding profile of the person entering the second zone 5-2, based on the imprint data received from the imprint detector 11-2 of the second zone 5-2.

At step S2-13, the monitoring module 27 compares the profile of the person entering the second zone 5-2 with previously generated profiles of people entering the first zone 5-1, to identify and retrieve a matching profile representative of the same person entering the first zone 5-1. Optionally, if the monitoring module 27 does not find a matching profile, an alert or notification message may be generated for output by the system 1. The monitoring module 27 may identify a matching profile 21 by comparing corresponding data values 25a of one or more characteristics defined by matching criteria. For example, monitoring module 27 may compare one or more of:
- The overall weight of the person, computed from either a single captured imprint or from captured imprints of both feet while the person is standing still on the pressure mat.
- The shape of a captured shoe imprint, for example to classify the type of shoe, such as a boot compared to high heels, and/or to determine the pattern of the tread.
- A shape characteristic associated with the left foot or shoe of a particular person, and a shape characteristic associated with the corresponding right foot or shoe of the same person, which should be a mirror image.
- The pressure distribution as the person's foot lands on and subsequently lifts of the pressure mat.
- A pressure-based signature, classifying unique behavioural traits such as a relatively hard impact from the back of the foot or shoe (i.e. the heel), distinct from a person who tends to walk on their front foot more.
- Time and/or distance between sequential captured imprints along a respective pressure mat.

It will be appreciated that the specific types of characteristics available for comparison by the monitoring module 27 at this step will depend on the particular imprint detectors 11 that are used in the system 1 and the types of imprint data captured by the imprint detectors 11, as well as the algorithms implemented by the profile generator 19 to generate the profiles based on the captured imprint data. It is also appreciated that accuracy of the monitoring module 27 in matching the profile 21 of a person entering the second zone 5-2 to the profile 21 of the same person entering the first zone 5-1 may be correlated with the complexity of the generated profiles. For example, a more complex profile having a greater number of characteristics may result in more accurate identification of that same person rather than a person with a similar set of profile characteristic s.

After identifying matching profiles 21 associated with the same person from respective zones 5, the monitoring module 27 identifies the respective capture time stamps 25c of the matching profiles 21, at step S2-15. At step S2-17, the monitoring module 27 computes the difference between the retrieved capture times 25c to determine the travel time of the identified person traversing from the first zone 5-1 to the second zone 5-2. The monitoring module 27 may also decrease the count of people in the monitored queue area 9, based on identifying a matching profile 21 subsequently entering the second zone 5-2, and thus exiting the monitored queue area 9. The computed queue measurements 31 are used by the monitoring module 27 to compute further queue measurements 31 for the associated queue area, including at least queue flow rates based on the calculated travel time by the identified person over the known distance 11 between first and second zones 5. Additionally, the system 1 generates and outputs control signals and/or notification data messages in response to analysis of the computed queue measurements, for example to automatically open or close other queue areas depending on the size and flow of the or each monitored queue area.

Optionally, the stored profiles 21 for the identified person may be removed from the memory 23 after the queue measurements have been computed and/or updated. Maintaining the database of stored profiles in this way advantageously minimizes the possibility of retrieving a matching profile that is associated with a different person. It will be further appreciated that in this way, the number of candidate profiles 21 that are stored in the memory 23 at any given time will be directly related to the maximum queue size within the monitored queue area.

### Computer Systems

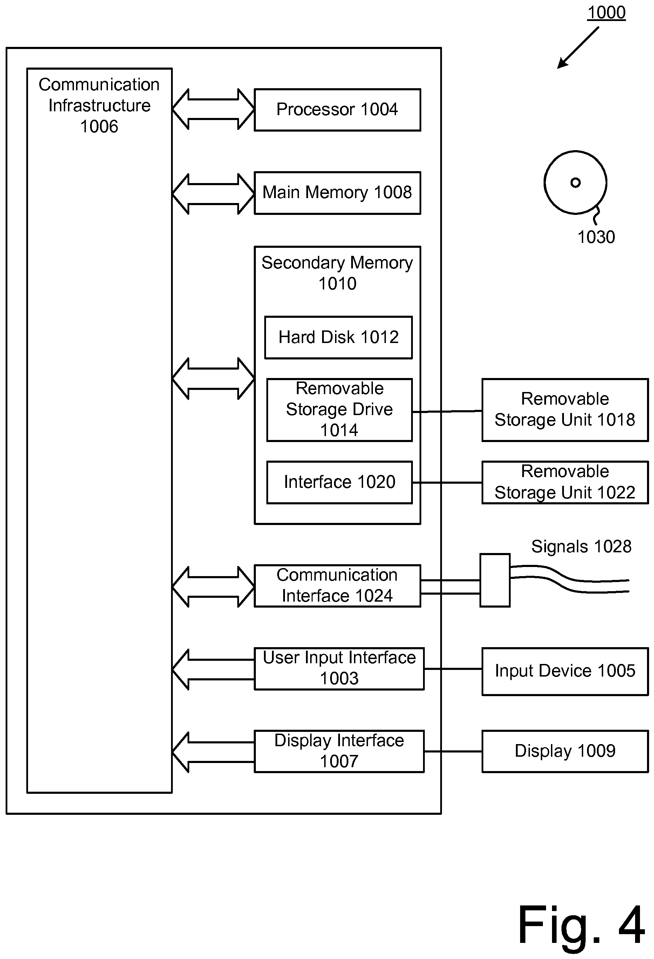

The entities described herein, such as the tracking system 3 and the imprint detectors 11, may each be implemented by one or more computer systems such as computer system 1000 as shown in Figure 4. Embodiments of the present invention may be implemented as programmable code for execution by such computer systems 1000. After reading this description, it will become apparent to a person skilled in the art how to implement the invention using other computer systems and/or computer architectures.

Computer system 1000 includes one or more processors, such as processor 1004. Processor 1004 may be any type of processor, including but not limited to a special purpose or a general-purpose digital signal processor. Processor 1004 is connected to a communication infrastructure 1006 (for example, a bus or network). Various software implementations are described in terms of this exemplary computer system. After reading this description, it will become apparent to a person skilled in the art how to implement the invention using other computer systems and/or computer architectures.

Computer system 1000 also includes a user input interface 1003 connected to one or more input device(s) 1005 and a display interface 1007 connected to one or more display(s) 1009. Input devices 1005 may include, for example, a pointing device such as a mouse or touchpad, a keyboard, a touchscreen such as a resistive or capacitive touchscreen, etc. After reading this description, it will become apparent to a person skilled in the art how to implement the invention using other computer systems and/or computer architectures, for example using mobile electronic devices with integrated input and display components.

Computer system 1000 also includes a main memory 1008, preferably random access memory (RAM), and may also include a secondary memory 610. Secondary memory 1010 may include, for example, a hard disk drive 1012 and/or a removable storage drive 1014, representing a floppy disk drive, a magnetic tape drive, an optical disk drive, etc. Removable storage drive 1014 reads from and/or writes to a removable storage unit 1018 in a well-known manner. Removable storage unit 1018 represents a floppy disk, magnetic tape, optical disk, etc., which is read by and written to by removable storage drive 1014. As will be appreciated, removable storage unit 1018 includes a computer usable storage medium having stored therein computer software and/or data.

In alternative implementations, secondary memory 1010 may include other similar means for allowing computer programs or other instructions to be loaded into computer system 1000. Such means may include, for example, a removable storage unit 1022 and an interface 1020. Examples of such means may include a program cartridge and cartridge interface (such as that previously found in video game devices), a removable memory chip (such as an EPROM, or PROM, or flash memory) and associated socket, and other removable storage units 1022 and interfaces 1020 which allow software and data to be transferred from removable storage unit 1022 to computer system 1000. Alternatively, the program may be executed and/or the data accessed from the removable storage unit 1022, using the processor 1004 of the computer system 1000.

Computer system 1000 may also include a communication interface 1024. Communication interface 1024 allows software and data to be transferred between computer system 1000 and external devices. Examples of communication interface 1024 may include a modem, a network interface (such as an Ethernet card), a communication port, a Personal Computer Memory Card International Association (PCMCIA) slot and card, etc. Software and data transferred via communication interface 1024 are in the form of signals 1028, which may be electronic, electromagnetic, optical, or other signals capable of being received by communication interface 1024. These signals 1028 are provided to communication interface 1024 via a communication path 1026. Communication path 1026 carries signals 1028 and may be implemented using wire or cable, fibre optics, a phone line, a wireless link, a cellular phone link, a radio frequency link, or any other suitable communication channel. For instance, communication path 1026 may be implemented using a combination of channels.

The terms "computer program medium" and "computer usable medium" are used generally to refer to media such as removable storage drive 1014, a hard disk installed in hard disk drive 1012, and signals 1028. These computer program products are means for providing software to computer system 1000. However, these terms may also include signals (such as electrical, optical or electromagnetic signals) that embody the computer program disclosed herein.

Computer programs (also called computer control logic) are stored in main memory 1008 and/or secondary memory 1010. Computer programs may also be received via communication interface 1024. Such computer programs, when executed, enable computer system 1000 to implement embodiments of the present invention as discussed herein. Accordingly, such computer programs represent controllers of computer system 1000. Where the embodiment is implemented using software, the software may be stored in a computer program product 1030 and loaded into computer system 1000 using removable storage drive 1014, hard disk drive 1012, or communication interface 1024, to provide some examples.

Alternative embodiments may be implemented as control logic in hardware, firmware, or software or any combination thereof

### Alternative Embodiments

The invention is defined by the appended claims. It will be understood that embodiments of the present invention are described herein by way of example only, and that various changes and modifications may be made without departing from the scope of the invention.

For example, in the embodiments described above, the computed queue measurements may be used by the tracking module to generate and transmit control signals to a control means that selectively blocks traffic flow through the monitored queue area to prevent people entering the travel path when the queue size and/or throughput rate is over a predetermined threshold. The control means may be a door or gate installed across a passage of the monitored queue area. Additionally or alternatively, control signals may be generated and transmitted to control means of one or more adjacent passages when the queue size and/or throughput rate is over the predetermined threshold, to selectively unblock traffic flow through the respective passages and alleviate congestion at the monitored queue area.

In an embodiment described above, the tracking system is communicatively coupled to respective imprint detectors associated with each of the first and second zones, each imprint detector having a pressure mat (i.e. pressure sensor) located on the floor of that zone. As those skilled in the art will appreciate, a single pressure mat (and/or thermal mat) may instead be provided, spanning the first and second zones. In such an alternative, a corresponding single imprint detector may be provided to transmit captured pressure data to the profile generator for processing. The imprint detector or profile generator may map the pressure data captured from respective locations of the single pressure mat to the respective zones defined relative to the dimensions of the pressure mat, to identify the corresponding capture zone of the corresponding generated profile.

Reference in this specification to "one embodiment" are not necessarily all referring to the same embodiment, nor are separate or alternative embodiments mutually exclusive of other embodiments. In particular, it will be appreciated that aspects of the above discussed embodiments can be combined to form further embodiments. Similarly, various features are described which may be exhibited by some embodiments and not by others. Yet further alternative embodiments may be envisaged, as long as they fall within the scope of the following claims.

## Claims

1. A queue monitoring system, comprising:
a memory, storing (15) data defining a travel path (7) of a monitored queue area, the travel path (7) including a first zone and a second zone, and a distance between the first and second zones along the travel path (7);
means for capturing, comprising at least one sensor comprised by the first zone, foot or shoe imprint data (11-1) from people entering the first zone at respective times, and determining a corresponding profile for each person entering the first zone based on the respective captured imprint data;
means for capturing, comprising at least one sensor comprised by the second zone, foot or shoe imprint data (11-2) from a person entering the second zone at a respective time, and determining a corresponding profile based on the respective captured imprint data;
means for comparing the profile (27) of the person entering the second zone to the profiles of people entering the first zone to determine a matching one of said profiles of people entering the first zone;
means for computing a travel time (27) from the first zone to the second zone from the relative capture times of the captured imprint data corresponding to the matching profiles of the person entering the first and second zones;
means for calculating a flow rate (27) between the first and second zone based on the stored distance between the zones along the travel path (7) and the computed travel time of the person entering the second zone; and
means for generating and outputting control signals and/or notification data messages in response to analysis of queue measurements based on the computed travel time.

2. The system of claim 1, wherein at least one sensor comprises at least one pressure mat configured to capture data defining a pressure imprint in response to the person entering the respective zone.

3. The system of claim 2, wherein the pressure imprint corresponds to an impression of the person's foot or shoe in contact with a pressure mat of the respective zone.

4. The system of any preceding claim, wherein at least one sensor comprises at least one thermal mat configured to capture data defining a heat imprint in response to the person entering the respective zone, and wherein the heat imprint corresponds to an imprint of the person's foot in contact with a thermal mat of the respective zone.

5. The system of any preceding claim, wherein the first and second zones are defined by the shape and size of the respective mats, or by relative areas of a single mat.

6. The system of any preceding claim, wherein at least one sensor comprises at least one thermographic camera configured to capture data defining a heat signature in response to the person entering the zone, and wherein the heat signature corresponds to an imprint of the person's foot in contact with a floor area of a respective zone.

7. The system of any preceding claim, wherein each profile includes data identifying at least one or more characteristics selected from weight, weight distribution, pressure distribution, heat distribution, foot shape, shoe shape and gait, and wherein the comparing means is configured identify matching profiles by comparing the respective one or more characteristics based on predefined matching criteria.

8. The system of any preceding claim, wherein the travel path is a linear or non-linear path.

9. The system of any preceding claim, further comprising means for computing a queue length based on the captured imprint data.

10. The system of any preceding claim, wherein the control signals comprise machine instructions to open or close another queue depending on a size and flow of the monitored queue area.

11. A computer implemented method for queue monitoring, comprising
storing (15) data defining a travel path (7) of a monitored queue area, the travel path (7) including a first zone and a second zone, and a distance between the first and second zones along the travel path (7);
capturing, using at least one sensor comprised by the first zone, foot or shoe imprint data (11-1) from people entering the first zone at respective times, and determining a corresponding profile for each person entering the first zone based on the respective captured imprint data;
capturing, using at least one sensor comprised by the second zone, foot or shoe imprint data (11-2) from a person entering the second zone at a respective time, and determining a corresponding profile based on the respective captured imprint data;
comparing the profile (27) of the person entering the second zone to the profiles of people entering the first zone to determine a matching one of said profiles of people entering the first zone;
computing a travel time (27) from the first zone to the second zone from the relative capture times of the captured imprint data corresponding to the matching profiles of the person entering the first and second zones;
calculating a flow rate (27) between the first and second zone based on the stored distance between the zones along the travel path (7) and the computed travel time of the person entering the second zone; and
generating and outputting control signals and/or notification data messages in response to analysis of queue measurements based on the computed travel time.

12. A computer readable medium comprising instructions which, when executed by the queue monitoring system of any one of claims 1-10, cause the queue monitoring system to carry out the method of claim 11.

## Patentansprüche

1. Warteschlangenüberwachungssystem, das Folgendes umfasst:
einen Speicher, der Daten speichert (15), die eine Wegstrecke (7) eines überwachten Warteschlangenbereichs definieren, wobei die Wegstrecke (7) eine erste Zone und eine zweite Zone und einen Abstand zwischen der ersten und der zweiten Zone entlang der Wegstrecke (7) umfasst;
Mittel, das mindestens einen in der ersten Zone enthaltenen Sensor umfasst, zum Erfassen von Fuß- oder Schuhabdruckdaten (11-1) von die erste Zone zu jeweiligen Zeitpunkten betretenden Personen, und Bestimmen eines entsprechenden Profils für jede die erste Zone betretende Person auf der Basis der jeweiligen erfassten Abdruckdaten;
Mittel, das mindestens einen in der zweiten Zone enthaltenen Sensor umfasst, zum Erfassen von Fuß- oder Schuhabdruckdaten (11-2) von einer die zweite Zone zu einem jeweiligen Zeitpunkt betretenden Person, und zum Bestimmen eines entsprechenden Profils auf der Basis der jeweiligen erfassten Abdruckdaten;
Mittel zum Vergleichen des Profils (27) der die zweite Zone betretenden Person mit den Profilen von die erste Zone betretenden Personen, um ein übereinstimmendes der genannten Profile von die erste Zone betretenden Personen zu bestimmen;
Mittel zum Berechnen einer Laufzeit (27) von der ersten Zone zur zweiten Zone anhand der relativen Erfassungszeiten der erfassten Abdruckdaten entsprechend den übereinstimmenden Profilen der die erste und zweite Zone betretenden Person;
Mittel zum Berechnen eines Durchsatzes (27) zwischen der ersten und zweiten Zone auf der Basis des gespeicherten Abstands zwischen den Zonen entlang der Wegstrecke (7) und der berechneten Laufzeit der die zweite Zone betretenden Person; und
Mittel zum Erzeugen und Ausgeben von Steuersignalen und/oder Mitteilungsdatennachrichten als Reaktion auf die Analyse von Warteschlangenmessungen auf der Basis der berechneten Laufzeit.

2. System nach Anspruch 1, wobei mindestens ein Sensor mindestens eine Druckmatte umfasst, konfiguriert zum Erfassen von Daten, die einen Druckabdruck als Reaktion auf das Betreten der jeweiligen Zone durch die Person definieren.

3. System nach Anspruch 2, wobei der Druckabdruck einem Abdruck des Fußes oder Schuhs der Person in Kontakt mit einer Druckmatte der jeweiligen Zone entspricht.

4. System nach einem vorherigen Anspruch, wobei mindestens ein Sensor mindestens eine Thermomatte umfasst, konfiguriert zum Erfassen von Daten, die einen Wärmeabdruck als Reaktion auf das Betreten der jeweiligen Zone durch die Person definieren, und wobei der Wärmeabdruck einem Abdruck des Fußes der Person in Kontakt mit einer Thermomatte der jeweiligen Zone entspricht.

5. System nach einem vorherigen Anspruch, wobei die erste und zweite Zone durch Form und Größe der jeweiligen Matten oder durch relative Flächen einer einzelnen Matte definiert sind.

6. System nach einem vorherigen Anspruch, wobei mindestens ein Sensor mindestens eine Wärmebildkamera umfasst, konfiguriert zum Erfassen von Daten, die eine Wärmesignatur als Reaktion auf das Betreten der Zone durch die Person definieren, und wobei die Wärmesignatur einem Abdruck des Fußes der Person in Kontakt mit einer Bodenfläche einer jeweiligen Zone entspricht.

7. System nach einem vorherigen Anspruch, wobei jedes Profil Daten enthält, die mindestens eine oder mehrere Eigenschaften ausgewählt aus Gewicht, Gewichtsverteilung, Druckverteilung, Wärmeverteilung, Fußform, Schuhform und Gang identifizieren, und wobei das Vergleichsmittel zum Identifizieren übereinstimmender Profile durch Vergleichen der jeweiligen ein oder mehreren Eigenschaften auf der Basis vordefinierter Übereinstimmungskriterien konfiguriert ist.

8. System nach einem vorherigen Anspruch, wobei die Wegstrecke ein linearer oder nichtlinearer Weg ist.

9. System nach einem vorherigen Anspruch, das ferner Mittel zum Berechnen einer Warteschlangenlänge auf der Basis der erfassten Abdruckdaten umfasst.

10. System nach einem vorherigen Ansprüche, wobei die Steuersignale Maschinenbefehle zum Öffnen oder Schließen einer anderen Warteschlange je nach Größe und Durchsatz des überwachten Warteschlangenbereichs umfassen.

11. Computerimplementiertes Verfahren zur Warteschlangenüberwachung, das Folgendes beinhaltet:
Speichern (15) von Daten, die eine Wegstrecke (7) eines überwachten Warteschlangenbereichs definieren, wobei die Wegstrecke (7) eine erste Zone und eine zweite Zone und einen Abstand zwischen der ersten und zweiten Zone entlang der Wegstrecke (7) umfasst;
Erfassen, mit mindestens einem in der ersten Zone enthaltenen Sensor, von Fuß- oder Schuhabdruckdaten (11-1) von die erste Zone zu jeweiligen Zeitpunkten betretenden Personen, und Bestimmen eines entsprechenden Profils für jede die erste Zone betretenden Person auf der Basis der jeweiligen erfassten Abdruckdaten;
Erfassen, mit mindestens einem in der zweiten Zone enthaltenen Sensor, von Fuß- oder Schuhabdruckdaten (11-2) von einer die zweite Zone zu einem jeweiligen Zeitpunkt betretenden Person, und Bestimmen eines entsprechenden Profils auf der Basis der jeweiligen erfassten Abdruckdaten;
Vergleichen des Profils (27) der die zweite Zone betretenden Person mit den Profilen von die erste Zone betretenden Personen, um ein übereinstimmendes der genannten Profile von die erste Zone betretenden Personen zu bestimmen;
Berechnen einer Laufzeit (27) von der ersten Zone zur zweiten Zone anhand der relativen Erfassungszeiten der erfassten Abdruckdaten entsprechend den übereinstimmenden Profilen der die erste und zweite Zone betretenden Person;
Berechnen eines Durchsatzes (27) zwischen der ersten und zweiten Zone auf der Basis des gespeicherten Abstands zwischen den Zonen entlang der Wegstrecke (7) und der berechneten Laufzeit der die zweite Zone betretenden Person; und
Erzeugen und Ausgeben von Steuersignalen und/oder Mitteilungsdatennachrichten als Reaktion auf die Analyse von Warteschlangenmessungen auf der Basis der berechneten Laufzeit.

12. Computerlesbares Medium, das Befehle umfasst, die bei Ausführung durch das Warteschlangenüberwachungssystem nach einem der Ansprüche 1-10 bewirken, dass das Warteschlangenüberwachungssystem das Verfahren nach Anspruch 11 durchführt.

## Revendications

1. Un système de surveillance de file d'attente, comprenant :
une mémoire, conservant en mémoire (15) des données définissant un trajet de déplacement (7) d'une zone de file d'attente surveillée, le trajet de déplacement (7) comprenant une première zone et une deuxième zone, et une distance entre les première et deuxième zones le long du trajet de déplacement (7),
un moyen de capture, comprenant au moins un capteur compris dans la première zone, de données d'empreinte de chaussure ou de pied (11-1) provenant de personnes pénétrant dans la première zone à des instants respectifs, et de détermination d'un profil correspondant pour chaque personne pénétrant dans la première zone en fonction des données d'empreinte capturées respectives,
un moyen de capture, comprenant au moins un capteur compris dans la deuxième zone, de données d'empreinte de chaussure ou de pied (11-2) provenant d'une personne pénétrant dans la deuxième zone à un instant respectif, et de détermination d'un profil correspondant en fonction des données d'empreinte capturées respectives,
un moyen de comparaison du profil (27) de la personne pénétrant dans la deuxième zone aux profils de personnes pénétrant dans la première zone de façon à déterminer un profil apparié desdits profils de personnes pénétrant dans la première zone,
un moyen de calcul d'un temps de parcours (27) de la première zone à la deuxième zone à partir des heures de capture relatives des données d'empreinte capturées correspondant aux profils appariés de la personne pénétrant dans les première et deuxième zones,
un moyen de calcul d'une vitesse d'écoulement (27) entre les première et deuxième zones en fonction de la distance conservée en mémoire entre les zones le long du trajet de déplacement (7) et du temps de parcours calculé de la personne pénétrant dans la deuxième zone, et
un moyen de génération et de production en sortie de signaux de commande et/ou de messages de données de notification en réponse à une analyse de mesures de file d'attente en fonction du temps de parcours calculé.

2. Le système selon la Revendication 1, où au moins un capteur comprend au moins un tapis sensible à la pression configuré de façon à capturer des données définissant une empreinte de pression en réponse à l'entrée de la personne dans la zone respective.

3. Le système selon la Revendication 2, où l'empreinte de pression correspond à une impression de la chaussure ou du pied de la personne en contact avec un tapis sensible à la pression de la zone respective.

4. Le système selon l'une quelconque des Revendications précédentes, où au moins un capteur comprend au moins un tapis thermique configuré de façon à capturer des données définissant une empreinte thermique en réponse à l'entrée de la personne dans la zone respective, et où l'empreinte thermique correspond à une empreinte du pied de la personne en contact avec un tapis thermique de la zone respective.

5. Le système selon l'une quelconque des Revendications précédentes, où les première et deuxième zones sont définies par la forme et la taille des tapis respectifs ou par des zones relatives d'un tapis unique.

6. Le système selon l'une quelconque des Revendications précédentes, où au moins un capteur comprend au moins une caméra thermographique configurée de façon à capturer des données définissant une signature thermique en réponse à l'entrée de la personne dans la zone, et où la signature thermique correspond à une empreinte du pied de la personne en contact avec une zone de plancher d'une zone respective.

7. Le système selon l'une quelconque des Revendications précédentes, où chaque profil contient des données identifiant au moins une ou plusieurs caractéristiques sélectionnées parmi poids, répartition de poids, répartition de pression, répartition thermique, forme de pied, forme de chaussure et démarche, et où le moyen de comparaison est configuré de façon à identifier des profils appariés par la comparaison des une ou plusieurs caractéristiques respectives en fonction de critères d'appariement prédéfinis.

8. Le système selon l'une quelconque des Revendications précédentes, où le trajet de déplacement est un trajet linéaire ou non linéaire.

9. Le système selon l'une quelconque des Revendications précédentes, comprenant en outre un moyen de calcul d'une longueur de file d'attente en fonction des données d'empreinte capturées.

10. Le système selon l'une quelconque des Revendications précédentes, où les signaux de commande comprennent des instructions informatiques destinées à l'ouverture ou à la fermeture d'une autre file d'attente en fonction d'une taille et d'un écoulement de la zone de file d'attente surveillée.

11. Un procédé mis en œuvre par ordinateur destiné à la surveillance d'une file d'attente, comprenant :
la conservation en mémoire (15) de données définissant un trajet de déplacement (7) d'une zone de file d'attente surveillée, le trajet de déplacement (7) comprenant une première zone et une deuxième zone, et d'une distance entre les première et deuxième zones le long du trajet de déplacement (7),
la capture, au moyen d'au moins un capteur compris dans la première zone, de données d'empreinte de chaussure ou de pied (11-1) provenant de personnes pénétrant dans la première zone à des instants respectifs, et la détermination d'un profil correspondant pour chaque personne pénétrant dans la première zone en fonction des données d'empreinte capturées respectives,
la capture, au moyen d'au moins un capteur compris dans la deuxième zone, de données d'empreinte de chaussure ou de pied (11-2) provenant d'une personne pénétrant dans la deuxième zone à un instant respectif, et la détermination d'un profil correspondant en fonction des données d'empreinte capturées respectives,
la comparaison du profil (27) de la personne pénétrant dans la deuxième zone aux profils de personnes pénétrant dans la première zone de façon à déterminer un profil apparié desdits profils de personnes pénétrant dans la première zone,
le calcul d'un temps de parcours (27) de la première zone à la deuxième zone à partir des heures de capture relatives des données d'empreinte capturées correspondant aux profils appariés de la personne pénétrant dans les première et deuxième zones,
le calcul d'une vitesse d'écoulement (27) entre les première et deuxième zones en fonction de la distance conservée en mémoire entre les zones le long du trajet de déplacement (7) et du temps de parcours calculé de la personne pénétrant dans la deuxième zone, et
la génération et la production en sortie de signaux de commande et/ou de messages de données de notification en réponse à une analyse de mesures de file d'attente en fonction du temps de parcours calculé.

12. Un support lisible par ordinateur contenant des instructions qui, lorsqu'elles sont exécutées par le système de surveillance de file d'attente selon l'une quelconque des Revendications 1 à 10, amènent le système de surveillance de file d'attente à exécuter le procédé selon la Revendication 11.
